# EUROPEAN PATENT APPLICATION

(11) **EP 4 324 594 A1**
(43) Date of publication of application: **21.02.2024**
(21) Application number: 22191335.3
(22) Date of filing: 19.08.2022
(51) Int. Cl.: B24B 13/005, G02C 7/02, G06K 7/14, G06T 7/00

(54) **METHOD FOR FACILITATING AN IDENTIFICATION OF AN OPTICAL MARK AND DATA PROCESSING DEVICE**

(71) Applicant: Carl Zeiss Vision International GmbH, 73430 Aalen (DE)
(72) Inventor: SCHOEBEL, Daniel, 73614 Schorndorf (DE); BINDER, Niklas, 90443 Nürnberg (DE); ARUNACHALA, Vivek, 73430 Aalen (DE); BUERGIN, Jens, 73433 Aalen (DE); BOLIUS, Vanessa, 70190 Stuttgart (DE)
(74) Representative: Tautz & Schuhmacher

(57) **Abstract**

A computer-implemented method (100) for facilitating an identification of an optical mark (410) in an image (400) of a spectacle lens (402) is provided. The method (100) is **characterized in that** it comprises a step of generating (104) enhancement information based on the image (400) of the spectacle lens (402), wherein the enhancement information is configured to enhance a detectability of the optical mark (410) in an automated identification process when an impairing structure (406) impairs the detectability of the optical mark (410) in the image (400). Furthermore, the method (100) comprises a step of providing (106) the generated enhancement information to the automated identification process for identifying the optical mark (410) using the enhancement information.

## Description

Provided are a computer-implemented method for facilitating an identification of an optical mark in an image of a spectacle lens and a data processing device. The disclosure is, thus, related to methods and devices of identifying optical marks in spectacle lenses.

In general, various machines in a spectacle lens manufacturing value chain must be able to reliably identify optical marks in the spectacle lens. Such optical marks may be provided as engravings and may serve as orientation marks, such as alignment reference marks. Moreover, optical marks may include alphanumeric codes and/or codes containing identification information, such as DataMatrix codes. The detection of such optical marks typically includes a visual detection based on conventional computer vision and computer-based pattern recognition.

Optical marks typically serve the purpose that their location is relevant as a spatial reference point and/or that their content contains information. Based on an image capturing setup and a used illumination method, interfering contours inside and/or on the lens can have a substantial impact on the quality of the taken images of the spectacle lens. The conventional implemented automated visual detection systems may fail and, thus, render the conventional device unable to automatically complete its workflow. Thus, some spectacle lenses may comprise structures in and/or on the lens body which interfere with the one or more optical marks and impair the visual detection of the optical marks. Such interfering structures are referred to as impairing structure throughout the present disclosure. For example, diffractive structures engraved into the spectacle lens and/or otherwise applied to the spectacle lens may act as impairing structures rendering the detection of optical marks challenging, in particular for an automated computer-vision based detection and identification of these optical marks. For example, a spectacle lens may comprise diffractive ring structures suitable for myopia control, which may be Fresnel rings, which may interfere with one or more optical marks of the spectacle lens and, thus, impair the automated detection and identification of the optical mark(s). Moreover, smart lenses having electronic and/or optical structures and/or elements integrated into the spectacle lens may comprise impairing structures rendering the detection and identification of optical marks challenging.

Methods and devices having the need of detecting and/or identifying one or more optical marks may be in particular such devices which are configured and used to control a quality of a spectacle lens, to engrave a brand mark into the spectacle lens, to stamp marks onto the spectacle lens, and/or to edge the spectacle lens.

Conventional methods and systems for detecting optical marks in a spectacle lens having the above-mentioned limitations are for instance described in US7508502B2 and in EP3382445B1.

The problem solved by the disclosure, thus, relates to providing a method and a data processing system overcoming the limitations of the prior art.

This problem is solved by a method and a data processing device having the features of the respective independent claim. Optional embodiments are provided in the dependent claims and the description.

In a first aspect, a computer-implemented method for facilitating an identification of an optical mark in an image of a spectacle lens is provided. The method is characterized in that the method comprises a step of generating enhancement information based on the image of the spectacle lens, wherein the enhancement information is configured to enhance a detectability of the optical mark in an automated identification process when an impairing structure impairs the detectability of the optical mark in the image. The method further comprises a step of providing the generated enhancement information to the automated identification process for identifying the optical mark using the enhancement information.

In another aspect a method for identifying an optical mark in a spectacle lens is provided. The method comprises a step of capturing an image of the spectacle lens and a step of facilitating the identification of the optical mark in the captured image of the spectacle lens by carrying out an above-mentioned method according to the disclosure. Moreover, the method comprises a step of identifying the optical mark in the spectacle lens using the provided enhancement information.

In another aspect a data processing system comprising a processor configured for the purpose of facilitating an identification of an optical mark in an image of a spectacle lens is provided. The data processing system is further configured to perform a step of generating enhancement information based on the image of the spectacle lens, wherein the enhancement information is configured to enhance a detectability of the optical mark in an automated identification process when an impairing structure impairs the detectability of the optical mark in the image. Moreover, the data processing system is further configured to provide the generated enhancement information to the automated identification process for identifying the optical mark using the enhancement information.

In yet another aspect a device is provided, which is configured to carry out at least one of controlling a quality of a spectacle lens, engraving a brand mark into the spectacle lens, stamping marks onto the spectacle lens, blocking a spectacle lens to a blocking piece, retrieving information from an optical mark of the spectacle lens, or edging the spectacle lens. The device comprises a data processing system according to the disclosure.

In yet another aspect, a computer program is provided, wherein the computer program comprises instructions which, when the program is executed by a computer, cause the computer to carry out a method according to the disclosure.

In yet another aspect, a computer-readable storage medium having stored thereon the above-mentioned computer program is provided.

In yet another aspect a data signal carrying the above-mentioned computer program is disclosed.

The method being computer-implemented means that some or all of the method steps may be carried out by a computer.

A spectacle lens may be an ophthalmic lens. The spectacle lens may be a conventional corrective lens according to section 3.5.3 of the standard IS013666:2019 or a smart lens having an additional functionality based on an electronic and/or optical signal input.

The optical mark may comprise or consist of an alignment reference mark suitable for determining an orientation of the spectacle lens. The optical mark may optionally provide information regarding the spectacle lens, the manufacturing process of the spectacle lens and/or the patient for whom the optical mark is intended. In particular, a spectacle lens may comprise more than one optical mark. The spectacle lens may comprise at least two optical marks configured as alignment reference marks which may define a horizontal axis of the spectacle lens. The optical mark may provide information due to its location in or on the spectacle lens, and may optionally act as a reference in an image-based or world-based coordinate system of the spectacle lens or a lens blank. An optical mark may be applied to a surface of the spectacle lens and/or integrated into the bulk volume of the spectacle lens.

The identification of an optical mark in the image of the spectacle lens may include determining the presence of one or more optical marks in an image captured of the spectacle lens. The identification may be carried out in an automated manner by a computer program executed on a data processing device. The identification of the optical mark may involve a pattern recognition. Besides the mere determination of the presence of the optical mark, the identification may include obtaining information about the type of the optical mark. Moreover, the identification may involve retrieving information provided by the optical mark. Furthermore, the identification may include determining a position and/or an orientation of the optical mark with respect to the spectacle lens and/or with respect to the image of the spectacle lens.

Moreover, the method may comprise determining a design of the spectacle lens. In case of a presence of ring-shaped impairing structures, this may include determining a diameter of a clear zone, i.e. a zone not having a ring-shaped impairing structure, in the center of the innermost ring-shaped impairing structure. The clear zone may, thus, correspond to a central zone of the spectacle lens. Alternatively or additionally, determining the design of the spectacle lens may include counting a number of ring-shaped impairing structures present in the spectacle lens.

The enhancement information may represent or include information facilitating the identification of the optical mark. Moreover, the enhancement information may provide such information about the optical mark which allows certain methods and/or devices to identify the optical mark, which are not or less able to identify the optical mark without the enhancement information. The enhancement information may limit the area of the image of the spectacle lens to be evaluated in the process of automatedly identifying the optical mark and/or improve the detectability of the optical mark in the image of the spectacle lens, and/or otherwise reduce the effort of identifying the optical mark in the automated identification process. Accordingly, the enhancement information may contain information for localizing one or more optical marks in the image of the spectacle lens and/or may contain a pre-processed image based on the original image of the spectacle lens. Accordingly, enhancing the detectability of the optical mark in an automated identification process may mean that the capability of the automated identification process to identify the optical mark is established or increased by the provided enhancement information.

Providing the enhancement information means that the enhancement information may be provided for its further use. The further use may comprise a use of the enhancement information by the same software program which generated the enhancement program and/or by a separate software program.

The automated identification process may be a process configured to retrieve the intended information from the one or more optical marks. In case of the optical mark(s) being alignment reference mark(s), the automated identification process may retrieve information regarding the position and/or orientation of the spectacle lens in the image. The automated identification process may be configured to use solely the enhancement information for retrieving the information of one or more of the optical marks. Alternatively or additionally the automated identification process may be configured to use the enhancement information and additional information, for instance additional information extracted from the image of the spectacle lens, to retrieve the intended information from the one or more optical marks.

An impairing structure is a structure present in or at the spectacle lens and/or in the image of the spectacle lens which impairs and/or affects the automated identification of the optical marks in the image of the spectacle lens. The impairing nature of the impairing structure may arise from parts of the impairing structure at least partly concealing the optical mark and/or at least partly interfering with the optical mark. This may render an automated identification involving an automated pattern detection difficult and may disable an automated identification. Alternatively or additionally, the impairing nature of the impairing structure may arise from a possible confusion originating in additional structures being present in and/or at the spectacle lens and/or in the image of the spectacle lens which may be falsely considered as optical marks in the automated identification process. The impairing structure(s) may arise from an intended structural feature of the spectacle lens, such as markings not intended for the automated identification process and/or providing an intended optical property of the spectacle lens, such as a diffractive structural pattern. In particular, the impairing structure may originate in diffractive rings for myopia progression adding a diffractive power to the spectacle lens, wherein the diffractive rings interfere and/or at least partly conceal the optical mark(s) to be identified. Alternatively or additionally, the impairing structure may arise from an undesired feature present in and/or at the spectacle lens, such as a contamination of the spectacle lens and/or a damage of the spectacle lens. An impairing structure may be one or more micro lenses, and/or Fresnel structures, and/or local changes in the refractive value of the material of the spectacle lens, and/or electrical components and/or electrochemical components (in particular in smart lenses), and/or added structures made of a different material than the rest of the spectacle lens and/or crystalline structures.

The identification of an optical mark may include determining a location of the engraving referenced in a coordinate system of the spectacle lens and/or in a world-based coordinate system and/or in a coordinate system of the image of the spectacle lens. Alternatively or additionally, the identification of an optical mark may include determining the shape of the optical mark, retrieving the content of the optical mark, in particular if the optical mark contains text, a DataMatrix code and/or otherwise retrievalbe information, and/or determining a category of the engraving.

A method for identifying an optical mark in a spectacle lens may be a method going beyond a method for facilitating an identification of an optical mark in a spectacle lens and may further include the actual identification of the optical mark. In other words, while a method for facilitating an identification of an optical mark may be directed towards preparing an identification of the optical mark by the same software program or a different software program, a method for identifying an optical mark may include said preparation and in addition also the automated identification process itself. An algorithm can be used for carrying out a workflow, wherein the workflow may be pre-configured by meta information, such as provided job data, which may include a lens blank diameter, a lens material and a lens design, and/or machine data, such as PCS data relating to the process control system. Throughout the disclosure, determining an optical mark means determining one or more optical marks. Likewise, identifying an optical mark means determining one or more optical marks.

The disclosure provides the advantage that an automated identification process for identifying an optical mark in an image of a spectacle lens may be carried out also for spectacle lenses having impairing structures. Impairing structures being present in the spectacle lens may result in conventional processes for determining optical marks not being able to determine the marks. However, the method for facilitating the identification of an optical mark allows preparing the identification of the optical mark to allow the identification of such optical marks being impaired by one or more impairing structures. Hence, the disclosure may allow using conventional automated identification processes which are regularly not enabled to identify optical marks in the presence of impairing structures by providing the enhancement information used for the automated identification process.

Thus, the disclosure provides the advantage that by providing enhancement information in a method for facilitating an identification of an optical mark in an image of a spectacle lens, conventional software programs and/or devices configured to identify optical marks in an image of a spectacle lens may be used also for such spectacle lenses having impairing structures. The method for facilitating the identification of an optical mark in an image of a spectacle lens may be carried out by a separate software program than the automated identification process using the enhancement information. The software program for the automated identification process may be a conventional software program for identifying optical marks in such spectacle lenses having no impairing structures. However, the conventional software program for identifying optical marks in such spectacle lenses may be adapted to carry out the automated identification process using the provided enhancement information. Alternatively, the method for facilitating the identification of an optical mark in an image may be combined with the automated identification process in one single software program, which may for instance replace a conventional software program for identifying optical marks in a spectacle lens having no impairing structures. Hence, the disclosure provides the advantage that a flexible adaptation of the methods and devices for carrying out an automated identification process can be provided, such that conventional devices for carrying out an automated identification process may be further used with spectacle lenses having impairing structures in combination with a software program for facilitating the identification of an optical mark in an image of a spectacle lens. Moreover, the disclosure provides the advantage that a conventional device for carrying out an automated identification process may be modified by replacing a software program such as to operate based on an above-described software program for identifying an optical mark in a spectacle lens according to the disclosure.

Therefore, the disclosure provides an advantage to enable conventional methods and devices to identify optical marks in spectacle lenses having impairing structures by simply combining it with a software program for carrying out a method for facilitating an identification of an optical mark in an image of a spectacle lens or by replacing the conventional software program with a software program for identifying an optical mark in a spectacle lens according to the present disclosure.

The method may further comprise a step of determining whether an impairing structure is present in the image of the spectacle lens prior to generating the enhancement information. The step of generating the enhancement information is optionally carried out only, if the presence of an impairing structure is determined. This may allow limiting an application of the method for facilitating an identification of an optical mark to such cases where one or more impairing structures are present and in which conventional automated identification processes may not be enabled to identify the optical marks without the enhancement information being provided. Hence, this provides the advantage that a modular character of the method for facilitating an identification of an optical mark in an image of a spectacle lens can be further increased. Alternatively or additionally the step of determining whether an impairing structure is present in the image may include evaluating a provided information. For instance, when providing an image for facilitating the identification of optical marks and/or for identifying an optical mark, a respective information may be provided indicating whether or not the spectacle lens in the image contains one or more impairing structure and optionally whether or not a process for facilitating the identification of optical mark(s) is recommended or required.

Moreover, the method may include analyzing geometrical properties of the impairing structures. This may include analyzing a size and/or a shape and/or a position and/or a number and/or a type of the one or more impairing structures.

The step of generating the enhancement information may include localizing the optical mark in the image of the spectacle lens and generating localization information of the optical mark. Accordingly, the step of providing the generated enhancement information to the automated identification process may include providing the localization information of the optical mark to the automated identification process for identifying the optical mark using the localization information. In other words, the enhancement information may include or consist of localization information for localizing the one or more optical marks. The localization information may include at least one coordinate of at least one optical mark, in particular of a center of the respective optical mark, with respect to the spectacle lens or with respect to the image of the spectacle lens. Optionally, the localization information may identify one or more pixels corresponding to the position(s) of the one or more optical marks. This provides the advantage that a further identification can be significantly facilitated as the exact position of the one or more optical marks may be pre-determined by the enhancement information for a subsequent automated identification process. In other words, the identification of the optical mark(s) is facilitated as the image of the spectacle lens may only need to be evaluated at the position(s) identified in the localization information provided as enhancement information. Moreover, the localization information provided as enhancement information may by itself satisfy the identification of the optical mark. In this case, no further identification of the optical mark may be required but the localization information provided as enhancement information may be the result of the identification process. Thus, the generated enhancement information may be provided to the automated identification process together with or without the image of the spectacle lens. In an optional embodiment, the localization information allows limiting the evaluation of the provided image of the spectacle lens to those areas identified in the localization information which may drastically reduce the effort of the automated identification process. This approach provides the further advantages that it offers a low complexity and a high reliability and accuracy directly reflected in the performance of the used algorithm.

The enhancement information may include an adapted image of the spectacle lens, in which one or more parts of the image, in which an optical mark is present, is kept unchanged or is adapted to highlight the optical mark in order to facilitate its identification. This may for instance include amplifying the optical mark and/or changing a color of the optical marks in the adapted image. Other parts of the image, in which no optical mark is detected, may be adapted to facilitate the identification of the optical marks in the other parts. This adaptation may for instance include deleting the parts of the image not including an optical mark and/or replacing the respective contents of the image by a plain color or any other content easily recognized as background not including an optical mark. Generating this kind enhancement information may involve an artificial intelligence based system for determining and localizing the optical marks in the image. The position(s) of the optical marks may then be maintained in an unchanged manner in the adapted image, such that the positions of the optical marks in the adapted image provides a localization information when the adapted image is provided as enhancement information to an automated identification process.

Alternatively or additionally the step of generating the enhancement information may include pre-processing the image of the spectacle lens to enhance a detectability of the optical mark for the automated identification process of the optical mark. Moreover, the step of providing the generated enhancement information to the automated identification process may include providing the pre-processed image to the automated identification process for identifying the optical mark based on the pre-processed image. Hence, the image may be pre-processed and a pre-processed image may be provided as enhancement information or a part of it to the automated identification process. This allows enhancing the detectability of the optical mark(s) in the pre-processed image and, thus, to reduce the requirements for the automated identification process. In particular, the pre-processing may include increasing a visibility of the optical marks in the pre-processed image as compared to the original image of the spectacle lens. This may provide the advantage that the a modular character of the method of facilitating the identification of an optical mark in the image of a spectral lens may be provided, i.e. that the method of facilitating the identification of the optical mark may optionally be carried prior to the actual automated identification process if a demand for increasing the detectability of the optical marks due to the presence of impairing structures is recognized. Moreover, this provides the advantage that modifications of the automated identification process may be obsolete or reduced to a minimum and, hence, no substantial adaptation of the automated identification process may be required. Consequently, this approach provides the further advantage that an access to the automated identification process, which may be carried out by conventional devices, for modifications may be minimized.

The pre-processing of the image comprises applying at least one of adaptive thresholding in the image, reducing noise in the image, enhancing a contrast of the image, or carrying out a Fourier-transformation and frequency-filtering. However, any other kind of pre-processing may be suitable which enhances a detectability of the optical marks in the image of the spectacle lens being at least partly impaired by an impairing structure. The pre-processing may result in reducing an impairment of the detectability and/or visibility of the optical mark(s) originating in one or more impairing structures. For instance, the pre-processing may increase the visibility of the optical mark(s) while decreasing the visibility of the impairing structures in a pre-processed image. The process of identifying the optical mark may be carried out solely based on the pre-processed image. However, according to other embodiments also other information may be provided as enhancement information, and/or the original image of the spectacle lens may be provided and/or other information may be used in the process of identifying the optical mark(s).

Generating the enhancement information may be carried out at least partly based on conventional pattern recognition or at least based on artificial-intelligence based pattern recognition. In the latter case, a particularly suitable neuronal network may be chosen for carrying out the generation of the enhancement information. Moreover, an artificial-intelligence based system may be trained for the particular purpose of generating the enhancement information. For instance, the artificial-intelligence based system may be trained to recognize the optical mark(s) in the image of the spectacle lens when at least partly impaired by at least one of one or several different types of impairing structures. In case one type of impairing structures are Fresnel rings, the artificial-intelligence based system may be trained to recognize predetermined optical marks when overlapped in the image by respective lines of the Fresnel rings. Likewise, a respective training of the artificial-intelligence based system may be provided enabling the artificial-intelligence based system to identify the optical mark(s) in the presence of different impairing structures and to generate enhancement information and/or to provide localization information and/or to directly identify the optical mark(s).

The conventional pattern recognition as used in conventional computer vision, i.e. not being based on artificial intelligence, may provide the advantage that no inferencing runtime of the data processing system is needed as it would be the case for an artificial intelligence based system. Moreover, it provides the advantage that no training of the data processing system on provided images of spectacle lenses having impairing structures is required. On the other hand, using an artificial intelligence based system for generating the enhancement information may provide the advantage that the reliability for the detection of optical marks may be increased and the required computing time may be reduced. The detection of optical marks impaired by an impairing structure appears to be a well-suited task for an artificial intelligence based system.

The method may further comprise retrieving an information from the optical mark, wherein the optical mark may be configured as a DataMatrix code. For instance, an alignment reference mark may be provided as a DataMatrix code providing information about the spectacle lens and/or its owner. Alternatively or additionally, an optical mark may comprise a barcode and/or a QR code and/or letters and/or digits readable by humans. The optical marks may in general provide information related to the spectacle lens, to a manufacturer of the spectacle lens, to a manufacturing process of the spectacle lens, to a manufacturing date of the spectacle lens, and/or to a patient for whom the spectacle lens is intended. Alternatively or additionally, the optical mark may include information for individualizing a spectacle lens for the patient, such as a name of the patient and/or some other information desired by the patient to be provided as an optical mark at the spectacle lens, such as a specific date, like a birth date and/or a wedding date, and/or a name of person or an animal associated with the patient.

The disclosure further comprises a computer-implemented method for preparing an automated process for identifying an optical mark on a spectacle lens, the method being characterized by comprising a step of localizing the optical mark in the image of the spectacle lens and determining localization information of the optical mark. Moreover, the method comprises a step of providing the localization information of the optical mark to the automated identification process for identifying the optical mark using the localization information. The localization information may include one or more coordinates of the optical mark with respect to the spectacle lens and/or with respect to the image of the spectacle lens.

The disclosure further comprises a computer-implemented method for pre-processing an image of a spectacle lens for identifying an optical mark on a spectacle lens, the method being characterized by comprising a step of pre-processing the image of the spectacle lens to enhance a detectability of the marking for an automated identification of the optical mark. Moreover, the method comprises a step of providing the pre-processed image to the automated process for identifying the optical mark based on the pre-processed image.

The disclosure further comprises a computer program stored on a non-transitory tangible computer-readable storage medium, the computer program comprising instructions which, when the program is executed by a computer, cause the computer to carry out a method according to the disclosure.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosire without limiting the disclosure to the described embodiments.

Further optional embodiments will be illustrated in the following with reference to the drawings. The Figures show:
- Figure 1: a schematical diagram of a computer-implemented method for facilitating an identification of an optical mark according to an optional embodiment;
- Figure 2: a method for identifying an optical mark in a spectacle lens according to an optional embodiment;
- Figure 3: a device comprising a data processing system according to an optional embodiment;
- Figures 4A and 4B: optional embodiments of spectacle lenses having impairment structures;
- Figure 4C: a 2D Fourier transformation of an image of a spectacle lens according to an optional embodiment;
- Figures 5A to 5D: a method for facilitating an identification of an optical mark according to an optional embodiment;

In the drawings the same reference signs are used for corresponding or similar features in different drawings.

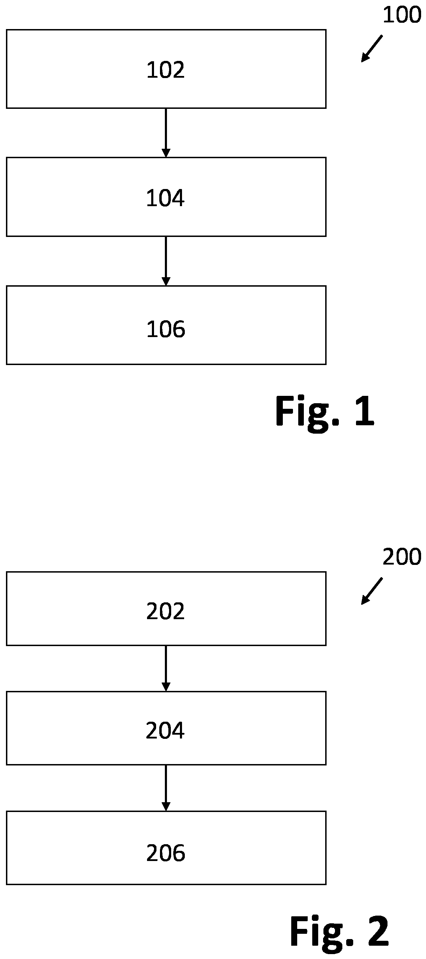

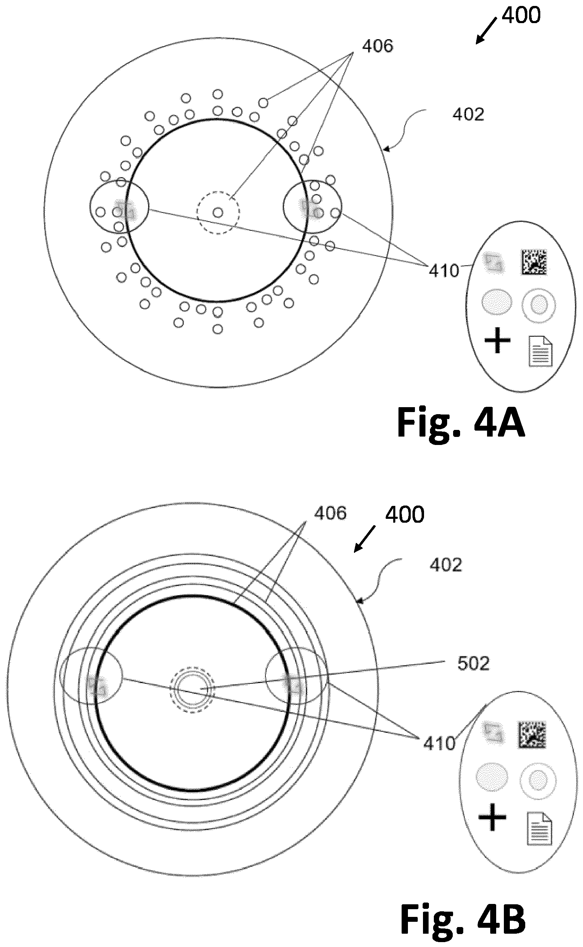

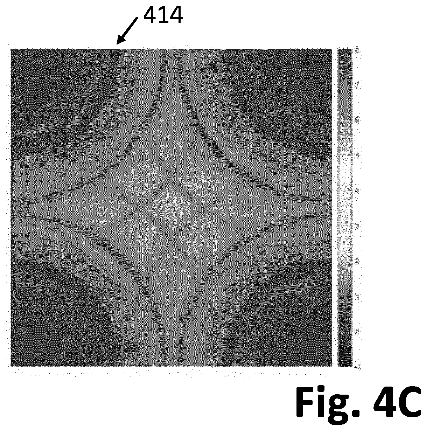

Figure 1 shows in a schematical diagram a computer-implemented method 100 for facilitating an identification of an optical mark 410 in an image 400 of a spectacle lens 402 according to an optional embodiment. An exemplary image 400 of a spectacle lens 402 is shown in Figures 4Aand 4B.

The method 100 comprises a step 102 of determining whether an impairing structure 406 is present in the image 400 of the spectacle lens 402 prior to generating the enhancement information.

The method 100 comprises a further step 104 of generating enhancement information based on the image 400 of the spectacle lens 402, wherein the enhancement information is configured to enhance a detectability of the optical mark 410 in an automated identification process when an impairing structure 406 impairs the detectability of the optical mark 410 in the image 400. Generating the enhancement information in step 104 is carried out only, if the presence of an impairing structure 406 is determined in step 102.

The method 100 further comprises a step 106 of providing the generated enhancement information to the automated identification process for identifying the optical mark 410 using the enhancement information.

The step 104 of generating the enhancement information may include localizing the optical mark 410 in the image 400 of the spectacle lens 402 and generating localization information of the optical mark 410. Accordingly, the step 106 of providing the generated enhancement information to the automated identification process includes providing the localization information of the optical mark 410 to the automated identification process for identifying the optical mark 410 using the localization information. The localization information may include at least one coordinate of the optical mark 410 with respect to the spectacle lens 402 or with respect to the image 400 of the spectacle lens 402. The generated enhancement information may be provided to the automated identification process together with or without the image 400 of the spectacle lens 402.

Alternatively or additionally, the step 104 of generating the enhancement information may include pre-processing the image 400 of the spectacle lens 402 to enhance a detectability of the optical mark 410 for the automated identification process of the optical mark 410. Accordingly, the step 106 of providing the generated enhancement information to the automated identification process may include providing the pre-processed image 400 to the automated identification process for identifying the optical mark 410 based on the pre-processed image 408. The pre-processing of the image 400 comprises at least one of adaptive thresholding on the image 400, reducing noise in the image 400, enhancing a contrast of the image 400, or carrying out a Fourier-transformation and frequency-filtering. Identifying the optical mark 410 may be carried out solely based on the pre-processed image 400. Generating the enhancement information in step 104 may be carried out at least partly based on conventional pattern recognition or at least based on artificial-intelligence based pattern recognition.

Figure 2 schematically depicts a method 200 for identifying an optical mark 410 in a spectacle lens according to an optional embodiment. The method 200 comprises a step 202 of capturing an image 400 of the spectacle lens 402. Moreover, the method 200 comprises a step 204 of facilitating the identification of the optical mark 410 in the captured image 400 of the spectacle lens by carrying out the above-described method 100. Furthermore, the method 200 comprises a step 206 of identifying the optical mark 410 in the spectacle lens using the provided enhancement information.

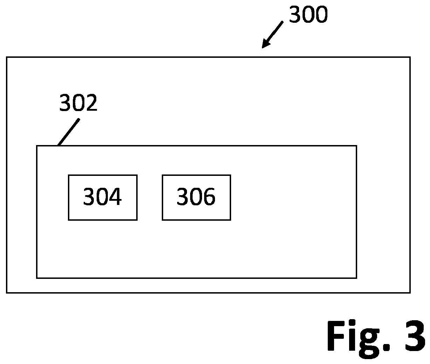

Figure 3 schematically depicts a device 300 configured to carry out at least one of controlling a quality of a spectacle lens 402, engraving a brand mark into the spectacle lens 402, stamping marks onto the spectacle lens 402, blocking a spectacle lens to a blocking piece, retrieving information from an optical mark 410 of the spectacle lens 402, or edging the spectacle lens 402. The device 300 comprises a data processing system 302, which may comprise a processor 304 and a memory 306. The data processing system 302 may be configured for the purpose of facilitating an identification of an optical mark 410 in an image 400 of a spectacle lens 402 and in particular for carrying out a method 100 as described with reference to Figure 1 and/or a method 200 as described with reference to Figure 2. The data processing system 302 may be configured to generate an enhancement information based on the image 400 of the spectacle lens 402, wherein the enhancement information is configured to enhance a detectability of the optical mark 410 in an automated identification process when an impairing structure 406 impairs the detectability of the optical mark in the image 400. In addition, the data processing system 302 may be configured to provide the generated enhancement information to the automated identification process for identifying the optical mark 410 using the enhancement information.

In the following several examples and features are disclosed in a non-limiting manner.

Figures 4A and 4B schematically illustrate images 400 of spectacle lenses 402 having optical marks 410 and impairing structures 406.

Figure 4A shows in an exemplary view an image 400 of a spectacle lens 402 having multiple small circular impairing structures 406, which are suitable to impair the detection of optical marks in the image 400 of the spectacle lens 402.

Figure 4B shows an image 400 of a spectacle lens 402 having large ring-shaped impairing structures 406, which may be Fresnel rings of a diffractive structure.

A pre-processed image may be generated based on the image 400 of the spectacle lens 402. An adaptive thresholding may be applied to the entire image 400 during pre-processing and/or a convolution to reduce noise. This may result in the pre-processed image having an enhanced visibility of the optical marks 410 and a reduced impairment by the impairing structures 406 for the detectability of the optical marks 410. The optical marks 410 may represent alignment reference marks, whose location indicates the orientation of the spectacle lens 402. According to the presented embodiment, the optical marks 410 may be formed in the shape of the letter "Z", which may in addition indicate the manufacturer of the spectacle lens. The enlarged section in Figures 4A and 4B adjacent to the reference numeral 410 indicates several examples of optical marks 410.

A further pre-processed image having further enhanced the detectability of the optical marks 410 with respect to the impairing structures 406 may be generated. The pre-processed image may be provided as enhancement information to an automated identification process to identify the optical marks 410. While the automated identification process may be unable to identify the optical marks 410 in the original image of the spectacle lens, the automated identification process may be well suited to identify the optical marks 10 in the pre-processed image. The axes of Figure 4C may indicate the pixel numbers in the pre-processed image.

Figure 4C exemplarily shows a 2D Fourier-transform 414 of the image 400 of the spectacle lens 402 in Figure 4B. Based on the 2D Fourier-transform 414, spatial frequency components originating in the Fresnel rings 404 may be identified and a frequency filtering may be applied to eliminate the spatial frequency components of the Fresnel rings, i.e. of the impairing structures 406. Applying an inverse 2D Fourier-transformation may then generate a pre-processed image to be provided as enhancement information for identifying the optical marks 401.

Moreover, a step of determining a design of the spectacle lens 402 may be carrier out. An automated process may determine a size and a location of a central section 502 of the spectacle lens 402. The spectacle lens 402 may have multiple ring-shaped impairing structures 406. A central section 502 may form a section surrounded by an inner most ring-shaped impairing structure 406. The central section 502 may be used for determining a location of an optical mark 410. A pre-processed image of the section of the image 400 of the spectacle lens 402, which may then be used in combination with the determined spectacle lens design as enhancement information for identifying one or more optical marks 410. Indicators highlighting a determined diameter of the central section 502 and a diameter of the second innermost ring-shaped impairing structure may be provided. Moreover, the several identified optical marks 410 are indicated in the image 400 of the spectacle lens 402, two of which represent alignment reference marks.

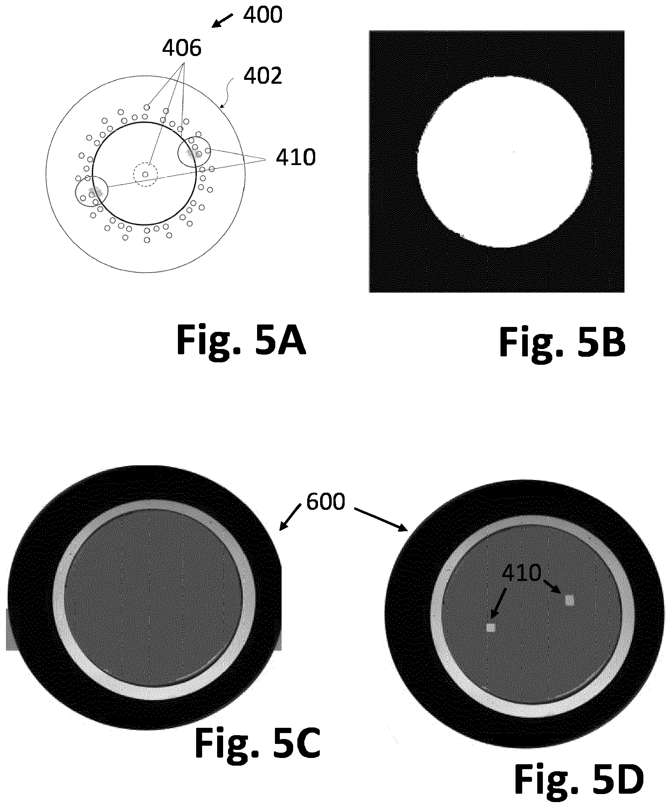

With reference to Figures 5A to 5D, a method 100 for facilitating an identification of an optical mark according to an optional embodiment is described. According to this optional embodiment, the step 104 of generating the enhancement information is carried out using an artificial-intelligence based software algorithm. In Figure 5A, an image 400 of the spectacle lens 402 is captured. Then, for generating the enhancement information, the captured image 400 is provided to the artificial-intelligence based software algorithm. Generating the enhancement information may then include determining a contour of the spectacle lens 402 (Figure 5B) and replacing the determined area confined by the contour with a pre-defined color tone (Figure 5C). For this purpose, a segmentation model "UNet" may be used to identify search areas based on a free form detection, which may work independently of a shape of the spectacle lens 410410. Moreover, based on the captured image 400 of the spectacle lens 402 the artificial-intelligence based software algorithm is used to detect the optical marks 410, which are at least partly impaired by ring-shaped impairing structures. For this purpose, an object detection model may be used, such as "ResNest101 FAST R-CNN backbone". The optical marks 410 are indicated in an enlarged view for the convenience of the reader. The artificial-intelligence based software algorithm may use a trained model optimized for determining and/or identifying the optical marks 410 when impaired by impairing structures 406. One or more impairing structures 406 may be predetermined to specifically train the artificial-intelligence based software algorithm for localizing the optical marks 410 when impaired by said impairing structures 406. Then, an artificial image 600of the spectacle lens 402 may be generated (Figure 5D) based on an image syntheses maintaining a correct relative positioning of the optical marks 410 and the spectacle lens 402, in which most parts of the image 400 of the spectacle lens 402 are replaced by the pre-defined color tone shown in Figure 5C and only the localized optical marks 410 are provided in the artificial image 600 at the exact position where they were localized in the captured image 400. This artificial image 600 may then be provided as enhancement information to facilitate the identification of the optical marks 410 in the spectacle lens 402, which may be carried out by a separate software program optionally operated at a conventional device for engraving a brand mark into the spectacle lens 402, stamping marks onto the spectacle lens 402, blocking a spectacle lens 402 to a blocking piece, retrieving information from an optical mark 410 of the spectacle lens 402, and/or edging the spectacle lens 402. Moreover, the method may include determining other optical marks 410 and/or parts of optical marks for determining an orientation of the spectacle lens 402, such as a detection of North and South of the spectacle lens 402. For this purpose, additional information may be determined, such as a location of a product type engraving, based on which the orientation of the spectacle lens 402 may be unambiguously determined. Such a product type engraving may be adjoined to another optical mark 410 or located separately from other optical marks 410.

A method for facilitating the identification of one or more optical marks according to another optional embodiment may be carried out. Like the above-described embodiments, also this embodiment is based on a captured image 400 of the spectacle lens 402, as shown in Figure 4B. Moreover, this method uses an artificial-intelligence based software algorithm for localizing the optical marks 410. The localization information, which may include the coordinates of the optical marks 410 with respect to the image 400 or the spectacle lens 402 may be provided as enhancement information and/or may be directly used to identify the optical marks 410. In particular the localization information may include the coordinate of the center point 700 of each of the identified optical marks 410. The coordinates may be provided in a coordinate system of the spectacle lens 402 having its origin in the center of the spectacle lens 402. The origin of the coordinate system may be determined based on the determined outer contour of the spectacle lens 402 and/or based on the innermost ring-shaped impairing structure 406 confining the central section 502 of the spectacle lens 402. The coordinates of the center of the respective optical mark 410 may be determined and used as localization information of the respective optical mark 410. The localization information may then be provided as enhancement information, which may directly allow identifying the optical marks 410 and/or which may be used in a further automated identification process for identifying the optical marks 410 using a conventional device. In this respect, a software program operated by a conventional device may be adapted to receive the enhancement information and to use the provided enhancement information for the further process carried out by the conventional device and/or for carrying out and optional additional identification of the optical marks 410. The conventional device may for instance be configured to or suitable for engraving a brand mark into the spectacle lens 402, stamping marks onto the spectacle lens 402, blocking a spectacle lens 402 to a blocking piece, retrieving information from an optical mark of the spectacle lens 402, and/or edging the spectacle lens 402.

Moreover, additional information may be determined based on a relative positioning of different optical marks 410. The optical marks 410 may represent alignment reference marks. In addition, a product type engraving and a customer engraving may be present in the spectacle lens and may be automatedly determined based the image of the spectacle lens. For identifying these additional engravings, their position to the optical marks 410 representing the alignment reference marks and the axis defined by the alignment reference marks may be evaluated. The relative positioning may facilitate a classification of said engravings. The product type engraving is located at a larger distance from the axis defined by the alignment reference marks than the customer engraving, which essentially is located on the axis defined by the alignment reference marks. Hence, a threshold value for the distance of the engravings from the axis defined by the alignment reference marks may be provided to distinguish between optical marks, such as a engravings, of different categories, such as product type engravings and customer engravings.

### List of reference signs

- 100: method for facilitating an identification of an optical mark
- 102 - 106: method steps
- 200: method for identifying an optical mark in a spectacle lens according to an optional embodiment
- 202 - 206: method steps
- 300: device
- 302: data processing system
- 304: processor
- 306: memory
- 400: image of spectacle lens
- 402: spectacle lens
- 406: impairing structure
- 410: optical mark
- 414: 2D Fourier-transform of image of spectacle lens
- 502: central section of a spectacle lens
- 600: artificial image

## Claims

1. Computer-implemented method (100) for facilitating an identification of an optical mark (410) in an image (400) of a spectacle lens (402), **characterized in that** the method (100) comprises the steps:
- generating (104) enhancement information based on the image (400) of the spectacle lens (402), wherein the enhancement information is configured to enhance a detectability of the optical mark (410) in an automated identification process when an impairing structure (406) impairs the detectability of the optical mark (410) in the image (400); and
- providing (106) the generated enhancement information to the automated identification process for identifying the optical mark (410) using the enhancement information.

2. Method according to claim 1, further comprising a step of determining (102) whether an impairing structure (406) is present in the image (400) of the spectacle lens (402) prior to generating (104) the enhancement information, wherein the step of generating (104) the enhancement information is carried out only, if the presence of an impairing structure is determined.

3. Method (100) according to claim 1 or 2, **characterized in that**:
- the step of generating (104) the enhancement information includes localizing the optical mark (410) in the image (400) of the spectacle lens (402) and generating localization information of the optical mark (410); and
- the step of providing (106) the generated enhancement information to the automated identification process includes providing (106) the localization information of the optical mark (410) to the automated identification process for identifying the optical mark (410) using the localization information.

4. Method (100) according to claim 3, wherein the localization information includes at least one coordinate of the optical mark (410) with respect to the spectacle lens (402) or with respect to the image (400) of the spectacle lens (402).

5. Method (100) according to claim 3 or 4, wherein the generated enhancement information is provided to the automated identification process together with or without the image (400) of the spectacle lens (402).

6. Method (100) according to any one of the preceding claims, **characterized in that**:
- the step of generating (104) the enhancement information includes pre-processing the image (400) of the spectacle lens (402) to enhance a detectability of the optical mark (410) for the automated identification process of the optical mark (410); and
- the step of providing (106) the generated enhancement information to the automated identification process includes providing the pre-processed image (108) to the automated identification process for identifying the optical mark (410) based on the pre-processed image (408).

7. Method (100) according to claim 6, wherein the pre-processing of the image (400) comprises at least one of adaptive thresholding on the image (400), reducing noise in the image (400), enhancing a contrast of the image (400), or carrying out a Fourier-transformation and frequency-filtering.

8. Method (100) according to claim 6 or 7, wherein identifying the optical mark (410) is carried out solely based on the pre-processed image (408).

9. Method (100) according to any one of the preceding claims, wherein generating (104) the enhancement information is carried out at least partly based on conventional pattern recognition or at least based on artificial-intelligence based pattern recognition.

10. Method (200) for identifying an optical mark (410) in a spectacle lens (402), the method comprising:
- capturing an image (202) of the spectacle lens (402);
- facilitating (204) the identification of the optical mark (410) in the captured image (400) of the spectacle lens (402) by carrying out a method (100) according to claim 1; and
- identifying (206) the optical mark (410) in the spectacle lens (402) using the provided enhancement information.

11. Computer program comprising instructions which, when the program is executed by a computer, cause the computer to carry out the method (100, 200) of any one of the preceding claims.

12. Computer-readable storage medium having stored thereon the computer program of claim 11.

13. Data signal carrying the computer program of claim 11.

14. Data processing system (302) comprising a processor (304) configured for the purpose of facilitating an identification of an optical mark (410) in an image (400) of a spectacle lens (402) and configured to perform the steps:
- generating (104) enhancement information based on the image (400) of the spectacle lens (402), wherein the enhancement information is configured to enhance a detectability of the optical mark (410) in an automated identification process when an impairing structure (406) impairs the detectability of the optical mark (410) in the image (400); and
- providing the generated enhancement information to the automated identification process for identifying the optical mark (410) using the enhancement information.

15. Device (300) configured to carry out at least one of controlling a quality of a spectacle lens (402), engraving a brand mark into the spectacle lens (402), stamping marks onto the spectacle lens (402), blocking a spectacle lens (402) to a blocking piece, retrieving information from an optical mark (410) of the spectacle lens (402), or edging the spectacle lens, **characterized in that**
the device (300) comprises a data processing system (300) according to claim 14.
